# EUROPEAN PATENT SPECIFICATION

(11) **EP 2 524 603 B1**
(45) Date of publication and mention of the grant of the patent: **31.08.2016**
(21) Application number: 12168202.5
(22) Date of filing: 16.05.2012
(51) Int. Cl.: A21C 15/00, A23G 1/04, A23G 1/18

(54) **A CHOCOLATE TEMPERING AND DISPENSING MACHINE**
MASCHINE FÜR DIE TEMPERIERUNG UND AUSGABE VON SCHOKOLADE
MACHINE DE TEMPERAGE ET DE DISTRIBUTION DE CHOCOLAT

(30) Priority: 18.05.2011 IT BO20110279
(43) Date of publication of application: 21.11.2012
(73) Proprietor: ALI S.p.A. - CARPIGIANI GROUP, 20123 Milano (IT)
(72) Inventor: Lazzarini, Roberto, 42100 Reggio Emilia (IT); Cocchi, Andrea, 40012 CALDERARA DI RENO (Bologna) (IT)
(74) Representative: Milli, Simone

(56) References cited:
- GB-A- 1 286 486
- US-A- 2 255 986

## Description

This invention relates to a machine for the processing, production and dispensing of chocolate in the liquid state and more precisely to a machine which can make a process for tempering chocolate.

The term tempering means a process by which the chocolate is subjected to a well determined succession of thermal treatments.

More in detail, the chocolate is firstly melted at a temperature of about 45°C; subsequently, it is cooled to approximately 27°C trying to avoid as much as possible the solidification; lastly, the chocolate is heated again to temperature of approximately 30°C.

This process allows a defined crystallisation of the cocoa-butter to be obtained and therefore a chocolate characterised by a better quality and surface sheen.

A fundamental aspect to be taken into consideration is the fact of having to keep under control the temperature of each treatment cycle, especially during the second heating, because if the temperature of the chocolate exceeds 33°C the crystallisation of the cocoa-butter obtained destabilises and it is necessary to repeat the tempering process.

As is known, machines of the aforementioned type comprise a box-shaped body having on the top a tank for containing the chocolate to be melted, a heating jacket associated with the tank, a motor-driven stirrer inside the tank for keeping in movement the melted chocolate avoiding the solidification and a tap for dispensing the chocolate drawn, using a pump, from the bottom of the tank. Moreover, there is a circuit for heating the jacket and a command and control unit for regulating the temperature of the tank, the speed of the stirrer and the dispensing tap.

The dispensing tap faces the containment tank, so as to recover any melted chocolate not drawn, and moreover, a support grating for containers or moulds is normally interposed between them for collecting dispensed melted chocolate.

However, these machines are not able to correctly perform the tempering process because they do not carry out the second heating of the chocolate before dispensing and the intermediate cooling is not controlled.

As regards the intermediate cooling, the chocolate drawn from the tank is brought to a lower temperature only by passing through the dispensing tap, and therefore not by a controlled cooling.

The lack of the second heating results in an imprecise crystallisation of the cocoa-butter, and therefore the production of a lower quality chocolate, both from a point of view of flavour and as regards a low surface sheen; in effect, when the chocolate solidifies, it is characterised by a surface which is opaque and not very shiny, due to the crystals of cocoa-butter which travel to the surface instead of remaining inside the chocolate itself.

Document GB 1286486 shows an apparatus for the treatment of chocolate having a first vessel equipped with a motorized agitator and a first jacket for heating and/or cooling the chocolate contained in the vessel. The apparatus also presents a second container (storage reservoir), positioned downstream of the first, equipped with a motorized agitator and a jacket for heating the chocolate.

The chocolate exiting the second container reaches, via a pump, a circulation container, heated by a heating jacket. The chocolate is fed from the container to a inlet for dispensing the chocolate, which presents a third heating jacket. The chocolate is then supplied with continuity within a box for coating products with processed chocolate. Document US 2255986 discloses an apparatus for conditioning chocolate having a cylindrical tank for containing the chocolate, inside which is placed a motorized scraper. The apparatus also presents a first jacket for heating the chocolate placed around the side wall of the tank, a second cooling jacket placed on the bottom of the tank, and a third heating jacket and means for adjusting the temperature of the first and the third heating jacket.

In this context, the technical purpose of this invention is to provide a machine for the instantaneous production and dispensing of cake and pastry fillings, ice cream products and the like which overcomes the aforementioned drawbacks.

More specifically, the aim of this invention is to provide a machine for the instantaneous production and dispensing of cake and pastry fillings, ice cream products and the like which is able to produce tempered chocolate according to the aforementioned heating and cooling cycles. Moreover, the aim of this invention is to provide a machine for the instantaneous production and dispensing of cake and pastry fillings, ice cream products and the like which is able to control temperatures of the heating and cooling cycles on the basis of the quality characteristics of the product or similar product to be tempered. According to this invention, the technical purpose and the aforementioned aims are achieved by a machine for the instantaneous production and dispensing of cake and pastry fillings, ice cream products and the like comprising the technical features described in claim 1.

Further features and advantages of this invention are more apparent from the non-limiting description which follows of a preferred, non-limiting embodiment of a tempering machine dispensing chocolate and similar products as illustrated in the accompanying drawings, in which:
- Figure 1 illustrates a machine for the instantaneous production and dispensing of cake and pastry fillings, ice cream products and the like according to this invention.
- Figure 2 is a schematic view of a first preferred embodiment of a detail of the machine according to this invention;
- Figure 3 is a schematic view of a second embodiment of the detail of Figure 2;
- Figure 4 is a schematic view of a third embodiment of the detail of Figure 2;
- Figure 5 illustrates a further detail of the machine according to this invention.

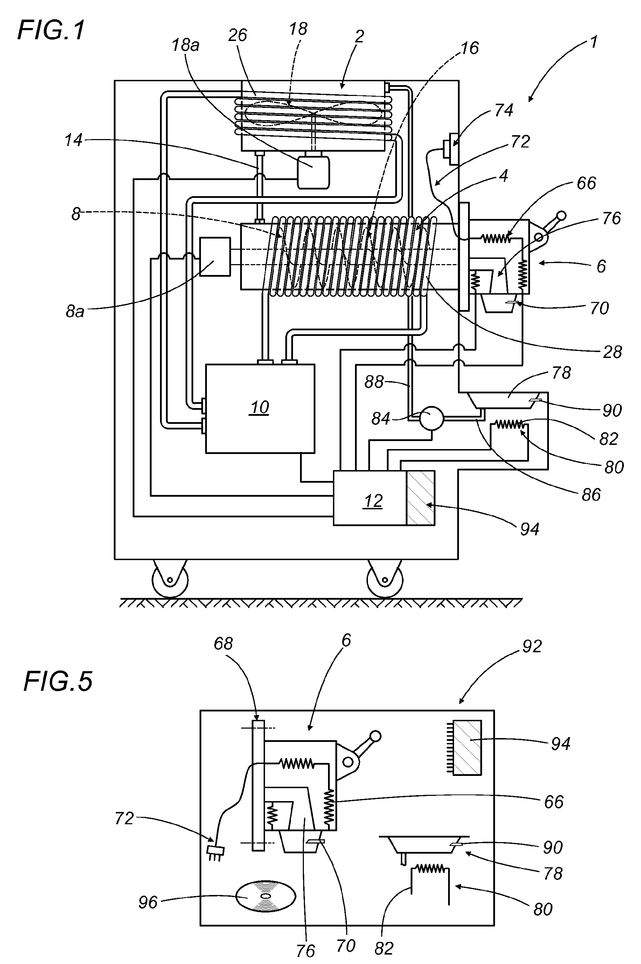

As illustrated in Figure 1, the numeral 1 denotes in its entirety a machine for the instantaneous production and dispensing of cake and pastry fillings, ice cream products and the like, comprising a tank 2 for collecting the chocolate to be processed, a cylinder 4 for processing the chocolate connected to the collection tank 2, a tap 6 for dispensing the chocolate flowing from the processing cylinder 4, at least a first stirrer 8 inside the cylinder 4 for mixing the chocolate being processed.

The machine 1 also comprises means 10 for heating the collection tank 2 for melting the chocolate contained at a first temperature, means for cooling the processing cylinder 4 for carrying the incoming chocolate to the dispensing tap 6 at a second temperature, and means for heating the dispensing tap 6 for dispensing the chocolate at a third temperature.

The machine 1 also has a unit 12 for adjusting and controlling the cooling and heating means 10 for adjusting each first, second and third temperature value on the basis of a respective predetermined and set value.

The collection tank 2 is mounted on the top of the machine 1 and connected to the processing cylinder 4 by a connecting duct 14.

Preferably, the tank 2 has an upper closing cover, not illustrated, which is able to protect the chocolate contained inside.

The collection tank 2 may advantageously have means, not illustrated in the accompanying drawings, for picking up the melted chocolate or other product contained therein in the form, for example, of a pump, which allows an easier transfer of the chocolate from the tank 2 to the processing cylinder 4.

The chocolate, once it has been introduced inside the processing cylinder 4, is moved by the first stirrer 8.

In a preferred embodiment, the first stirrer 8 is in the form of a motor-driven screw 16, which not only allows the mixing of the mass of chocolate making it more homogeneous, but at the same time favours the movement of the chocolate towards the dispensing tap 6.

The machine 1 also has at least one second mixer, labelled 18 in the figure, inside the collection tank 2. The second mixer 18 keeps the chocolate moving during the melting step, preventing the solidification by a continuous mixing; the mixing also favours the melting of all the parts of the mass of chocolate contained therein, thereby avoiding the formation of solid lumps which could obstruct the connection duct 14 with the processing cylinder 4, or prevent the desired quality of chocolate from being obtained.

The first and the second mixer 8, 18 are logically connected to the adjustment and control unit 12, as illustrated in figure 1 in which the mixers 8, 18 are connected to the unit 12 through respective motors 8a and 18a, so as to suitably adjust the speed of the mixers 8, 18 on the basis of the temperature of the collection tank 2 and the processing cylinder 4 and/or the density of the chocolate being processed. In this way it is possible to even out the heat exchange during the movement, guaranteeing also a uniform smoothness of the chocolate mixed.

The cooling and heating means 10 comprise a fluid heat exchange circuit 20.

The heat exchange circuit 20 has a motor-driven compressor 22 for circulating the heat exchange fluid, a heat exchanger 24, of known type, for cooling the fluid coming from the motor-driven compressor 22.

A first heat exchanger jacket 26 is positioned downstream of the motor-driven compressor 22 and mounted around the collection tank 2.

A second heat exchanger jacket 28 is positioned downstream of the motor-driven compressor 22 and mounted around the processing cylinder 4.

The heat exchange circuit 20 comprises a first portion 30 for heating the chocolate and a second portion 32 for cooling the chocolate.

More in detail, the circuit 20 subdivides in the first 30 and in the second 32 portion at a first point P1 coming from the motor-driven compressor 22. More specifically, the branch of circuit 20 coming from the motor-driven compressor 22 divides into a first 34 and a second 36 branch.

The heat exchange fluid designed to heat the chocolate being processed flows through the first branch 34.

The heat exchange fluid designed to cool the chocolate being processed flows through the second branch 36.

In other words, the first 34 and the second 36 branch form, at point P1, the entrance for the heat exchange fluid into the first 30 and into the second 32 portion of circuit 20.

At a second point P2 the first branch 34 divides further into a third 38 and a fourth 40 branch.

The third branch 38 guides the fluid, in this case for heating, towards the first jacket 26 positioned around the collection tank 2.

The fourth branch 40 guides the fluid towards the second jacket 28 positioned around the processing cylinder 4.

Similarly, at a third point P3 the second branch 36 divides into a fifth 42 and a sixth 44 branch.

The fifth branch 42 guides the fluid, in this case for cooling, towards the first jacket 26.

The sixth branch 44 guides the fluid towards the second jacket 28.

The third 38 and the fifth 42 branch reconnect at a fourth point P4, at the infeed to the first jacket 26.

Similarly, the fourth 40 and the sixth 44 branch reconnect at a fifth point P5, at the infeed to the second jacket 28.

The outfeed of the first 26 and of the second 28 jacket then reconnect at a sixth point P6, downstream of which the fluid is re-sent to the infeed of the motor-driven compressor 22.

The circuit 20 means 46 for adjusting the flow of fluid entering the first 26 and the second 28 jacket.

The adjustment means 46 comprise a plurality of electronically controlled on-off valves or solenoid valves positioned, respectively, on the first 30 and on the second 32 portion of the circuit 20, upstream of the collection tank 2 and the processing cylinder 4.

More in detail, the third 38 and fourth 40 branch have, respectively, a first 48 and a second 50 solenoid valve, positioned upstream of the joining point with the fifth 42 and sixth 44 branch.

The fifth 42 and sixth 44 branch also have, respectively, a third 52 and a fourth 54 solenoid valve, positioned upstream of the joining point with the third 38 and fourth 40 branch.

An important aspect to be taken into consideration is that the fluid coming from the motor-driven compressor 22 has a high temperature. It is therefore possible, in the case of heating the chocolate, to advantageously use the high temperature of the heat exchange fluid coming from the motor-driven compressor 22, sending it directly to the first 26 and to the second 28 jacket. In this way it is possible to heat the chocolate without using other suitable heating devices. However, if the chocolate is to be cooled it is necessary to cool the fluid coming from the motor-driven compressor 22.

The cooling of the fluid is performed by the heat exchanger 24, which, more specifically, is positioned at the second portion 32 of the circuit 20.

Moreover, the flow adjustment means 46 comprise a first 56 and a second 58 lamination valve positioned, respectively, on the fifth 42 and on the sixth 44 branch. The first 56 and the second 58 lamination valves are also positioned downstream of the third 52 and the fourth 54 solenoid valves and upstream, respectively, of the fourth P4 and the fifth P5 points.

The lamination valves 56, 58 perform an expansion of the heat exchange fluid allowing a more effective cooling of the chocolate being processed. The solenoid valves 56, 58 are logically connected to the adjustment and control unit 12.

During the chocolate heating process, the unit 12 sends a first signal S1 and a second signal S2, respectively, to the third 52 and to the fourth 54 solenoid valve, for closing the solenoid valves. In this way, the fluid coming from the motor-driven compressor 22 can flow exclusively in the first portion 30 of the circuit 20, thus heating the chocolate contained in tank 2 and in cylinder 4. During the cooling process, the unit 12 sends a third signal S3 and a fourth signal S4, respectively, to the first 48 and to the second 50 solenoid valve, for closing the solenoid valves. In this way, the fluid coming from the motor-driven compressor 22 is directed towards the second portion 32 of the circuit 20, and then towards the heat exchanger 24 and the respective lamination valves 56, 58 upstream of tank 2 and cylinder 4.

As already mentioned, the unit 12 controls the flow adjustment means 46 for controlling the temperature of the chocolate being processed coming from the tank 2 and from the cylinder 4.

The unit 12 regulates the temperature of the chocolate being processed, adjusting the opening and closing of the aforementioned solenoid valves 48, 50, 52, 54. More specifically, the adjustment is performed according to the time necessary for the chocolate to reach the values of the first and second predetermined and set temperatures. Specifically, during heating, the unit 12 independently controls the opening of the first 48 and the second 50 solenoid valve for a predetermined and set time. In this way, the chocolate in tank 2 can reach the value of the first temperature and, independently, the chocolate contained in the cylinder 4 can reach the value of the second temperature.

In the same way, by operating the third 52 and the fourth 54 solenoid valve, the unit 12 allows an independent adjustment of the temperature of the chocolate in tank 2 and in cylinder 4 also in the event of a cooling process.

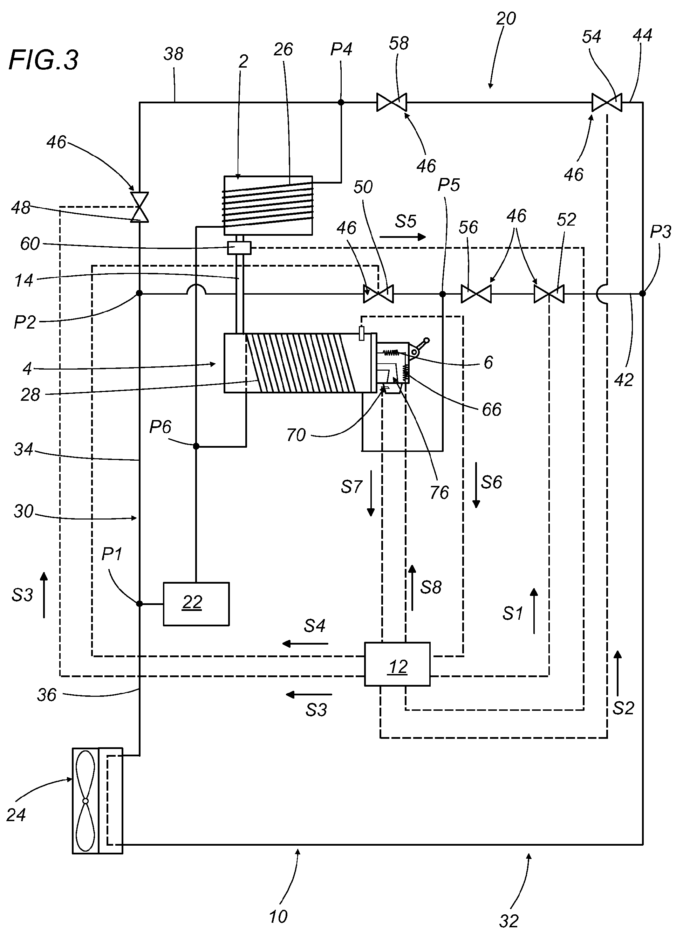

According to a second embodiment illustrated in Figure 3, the means 46 of adjusting the heat exchange fluid comprise a first temperature sensor 60, mounted at the outfeed of the collection tank 2.

Preferably, the first temperature sensor 60 is mounted at the duct 14 for connecting the collection tank 2 with the processing cylinder 4. The adjustment means 46 also comprise a second temperature sensor 62, which is mounted at the outfeed of the processing cylinder 4. Preferably, the second sensor 63 is immersed in the chocolate being processed.

The temperature sensors 60, 62 measure the temperature of the chocolate coming from the tank 2 and from the cylinder 4, and send respective signals to the unit 12 indicating the temperatures measured.

The first temperature sensor 60 sends a fifth signal S5 to the unit 12 indicating the temperature of the chocolate measured at the outfeed of the collection tank 2. In the same way, the second temperature sensor 62 sends a sixth signal S6 to the unit 12 indicating the temperature of the chocolate measured at the outfeed of the cylinder 4.

As a result of the signals S5 and S6 received, the adjustment and control unit 12 moves the solenoid valves 48, 50 ,52, 54 to the open or closed configuration. Advantageously, the unit 12 in this way keeps constant over time the predetermined and set temperature of the chocolate coming from the tank 2 and from the cylinder 4.

These considerations are to be considered fully applicable both for a chocolate heating and cooling process.

The first 60 and the second 62 temperature sensor allow a continuous control, and consequent adjustment, of the temperature of the product on the basis of the first and the second predetermined and set values.

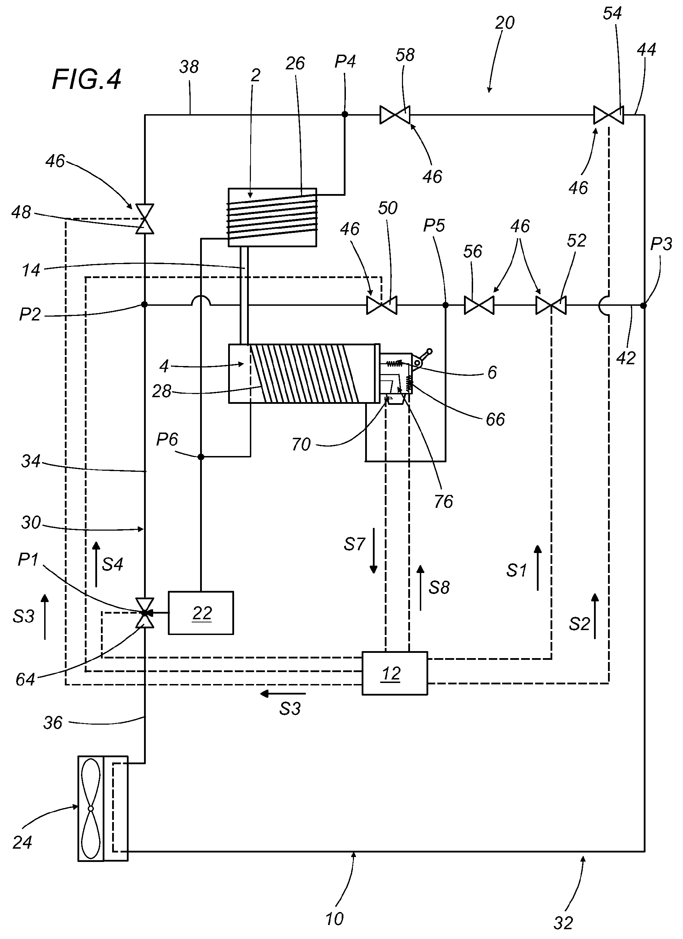

According to a third embodiment illustrated in Figure 4, the flow adjustment means 46 comprise a 3-way valve 64 positioned downstream of the motor-driven compressor 22. More specifically, the 3-way valve 64 is mounted at point P1.

The infeed of the 3-way valve 64 is connected to the outfeed of the motor-driven compressor 22, whilst each outfeed is connected, respectively, to the first 34 and to the second 36 branch, and therefore to the first portion 30 and to the second portion 32 of the circuit 20.

The adjustment and control unit 12 acts on the 3-way valve 64 suitably directing the fluid coming from the motor-driven compressor 22 to the first 34 or the second 36 branch, according to whether the chocolate must be heated or cooled.

In this embodiment, in particular, the solenoid valves 48, 50, 52, 54 on the branches of the first 30 and the second 32 portion have the sole function of preventing the addition of fluid to the first 26 and to the second 28 jacket after reaching the desired first and second temperature values of the chocolate.

It is no longer necessary to activate these solenoid valves to isolate the first 30 or the second 32 portion of the circuit 20, because it is the 3-way valve 64 to allow the the fluid coming from the motor-driven compressor 22 to be directed towards the first branch 34 and not towards the second branch 36, and vice versa.

Specifically, the unit 12 keeps the solenoid valves in the open configuration, of the portion of circuit active and through which the heat exchange fluid flows, until reaching the desired temperature of the chocolate, and subsequently switches them to the closed configuration when this temperature has been reached.

Preferably, also in this case, the unit 12 independently controls the opening of the solenoid valves of the portion of circuit 20 active for a predetermined and set time.

In this way, the chocolate in tank 2 can, also in this embodiment, reach the value of the first temperature and, independently, the chocolate contained in the cylinder 4 can reach the value of the second temperature.

Moreover, the unit 12 is able to keep constant over time the value of the first temperature of the chocolate coming from the tank 2. In the same way, the unit 12 is able to keep constant over time the value of the second temperature of the chocolate coming from the processing cylinder 4.

The flow adjustment means 46 may also be formed by a fourth embodiment, not illustrated, comprising the 3-way valve 64, as described for the third embodiment, and the first 60 and the second 62 temperature sensors, as described for the second embodiment.

With reference to Figure 1, the heating means 10 also comprise at least a first resistor 66 inside the dispensing tap 6.

The first resistor 66 is activated by the adjustment and control unit 12 and is designed to heat the dispensing tap 6 for carrying the chocolate dispensed to the value of the third temperature.

The resistor 66 is only activated in the case of heating of the chocolate because, in the case of a cooling process, it is not normally necessary to perform any thermal treatment on the chocolate flowing from the processing cylinder 4.

Given the possibility of providing the dispensing tap 6 with a first resistor 66, the dispensing tap 6 is equipped with fast coupling-uncoupling means 68, which allow the dispensing tap 6 to be disengaged from the body of the machine 1.

The dispensing tap 6 is therefore interchangeable. More specifically, the dispensing tap 6 may constitute a part of a unit (kit) 58, which is described in more detail below.

Further, the dispensing tap 6 comprises internally a third temperature sensor 70, for monitoring the temperature of the chocolate dispensed.

The adjustment and control unit 12 calibrates the third sensor 70 on the value of the third temperature.

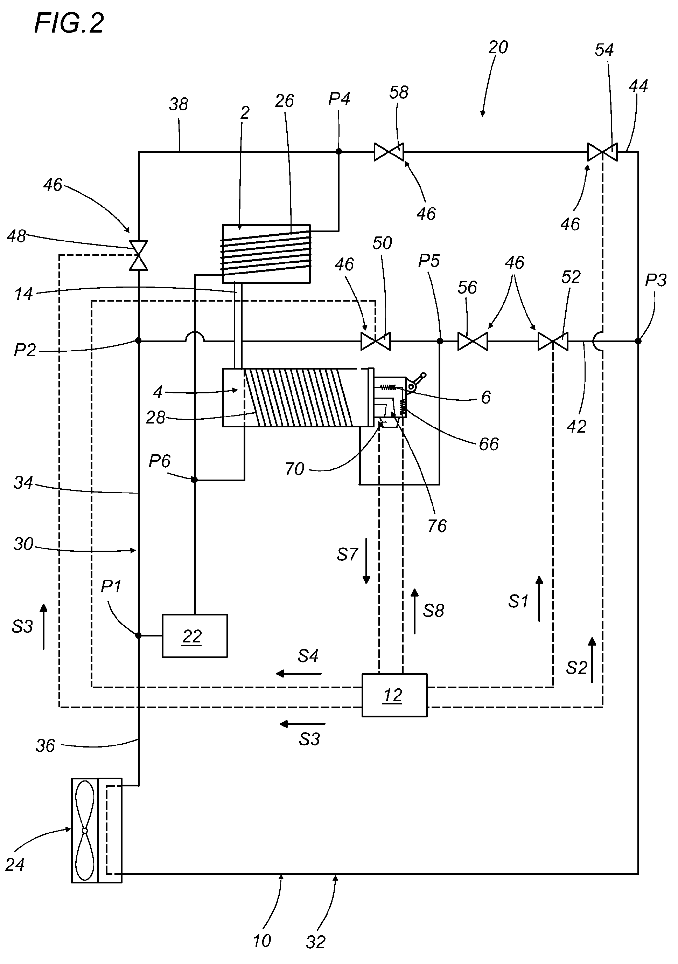

The third sensor 70, as illustrated in Figure 2, sends a seventh signal S7 to the unit 12, which adjusts the first resistor 66, using an eighth signal S8, for keeping constant over time the chocolate dispensed, in this case the melted chocolate, on the value of the third temperature. Preferably, it is possible to prepare a generic machine 1 for converting a tempering machine using the aforementioned kit, equipping the machine 1 with means of electrical connection with the first resistor.

For example, as illustrated schematically in Figure 1, the first resistor 66 is connected directly to the machine 1 using a cable 72 and an electrical socket 74. In addition, other types of known connections, not described in further detail, are possible.

In another embodiment, not illustrated, the heating means 10, relative to the dispensing tap 6, may consist of the aforementioned fluid heat exchange circuit 20. In this embodiment it is possible to implement another stretch, not illustrated, of the circuit 20 inside the dispensing tap 6 so as to heat it, and also cool it if necessary, using the heat exchange fluid.

Moreover, the dispensing tap 6 has, according to the preferred embodiment, a dispensing duct 76 having a geometry such as to increase the heat exchange between chocolate and first resistor 66. By way of example, the duct 76 can have a geometry diverging from the inside towards the outfeed of the dispensing tap 6, as illustrated in Figure 5, so as to induce a substantial expansion of the chocolate being dispensed, thus improving and increasing the heat exchange effect.

The machine 1 has a tank 78 for recovering the dispensed chocolate, not drawn, located below the dispensing tap 6, facing the outlet of the dispensing tap 6.

The recovery tank 78 is equipped with heating means 80 designed to prevent the solidification of the chocolate; in this way it is possible to recover the chocolate not drawn and not waste it.

The heating means 80 are, according to the preferred embodiment, defined by at least a second resistor 82 which may be activated by the adjustment and control unit 12.

According to other embodiments, not illustrated, the heating means 80 can be of another type. For example, the heat exchange circuit 20 may have another stretch, not illustrated, which is in contact with the recovery tank 78, for heating it/cooling it as necessary.

More specifically, the machine 1 has a pump 84 for sucking the chocolate from the recovery tank 78. The pump 84 is positioned downstream of the recovery tank 78, and it is able to recover, through a suction duct 86, the chocolate contained in the recovery tank 78, and to deliver the chocolate, through a delivery duct 88, to the collection tank 2.

The recovery tank 78 can also advantageously have a sensor 90, which measures the level of chocolate contained in the tank 78, so as to operate the suction and delivery pump 84 only when necessary. In addition, the continuous operation of the pump 84 is permitted thus avoiding that the presence of residue in the recovery tank 78 could result in the formation of bacteria, which could contaminate, with the recovery, also the chocolate contained in the collection tank 2.

The adjustment and control unit 12 operates the heating means 80 of the recovery tank 78, to keep the chocolate in the melted state only when necessary, so as to avoid excessive overheating which could result in the burning of the chocolate or an excessively high temperature.

In an alternative embodiment, not illustrated, the recovery tank 78 can also have a temperature sensor, positioned on the suction duct 86, for keeping the temperature of the chocolate recovered controlled and, preferably, constant over time. According to the preferred embodiment, the first, second and third temperature values may be set by an external operator by reconfiguring the adjustment and control unit 12.

More in detail, these value are set in advance on the basis of the quality characteristics of the chocolate.

According to the content of cocoa-butter present in the chocolate, it is necessary, in order to achieve an optimum tempering, to carry the chocolate to well defined temperature stages.

The chocolate should have a content of cocoa-butter crystals of a defined type, more precisely crystals β with a stable structure, of about 4-5%. In this way it is possible to obtain a tempered chocolate which has a high surface quality, that is, having a glossy surface with opaqueness reduced to a minimum. Carrying the chocolate to suitable temperature stages prevents the cocoa-butter crystals from moving to the surface and turning it opaque.

For this reason the temperature of the chocolate should be controlled over time and in particular kept constant over time avoiding sudden changes. Specifically, the value of the first temperature is preferably set between 40°C and 55°C.

The value of the second temperature is preferably set between 23°C and 30°C.

The value of the third temperature is preferably set between 27°C and 33°C.

As mentioned above, the machine 1 can comprise a reconfiguration kit 92.

The kit 92 can be sold separately to the machine 1 and can also be mounted on existing machines.

For example, machines can be adapted for making ice cream or similar products, simply by replacing some components.

More in detail, as shown in Figure 5, the kit 58 comprises the dispensing tap 6 comprising the first resistor 66, the recovery tank 78 comprising the second resistor 82 and a configuration card 94 of the adjustment and control unit 12.

The adjustment and control unit 12 is equipped with an interchangeable electronic configuration card 94, in such a way that, according to the desired requirements for operating the machine 1, heating or cooling of the chocolate, there is a fast reconfiguration of the machine 1, thus reducing the time necessary to start the new production. Advantageously, as already mentioned, the suction and delivery pump 84 can also form part of the kit 92 or the machine 1 can be equipped with one in advance.

The kit 92 also has a programming disc 96 containing information and data, relative to the predefined temperature values, for automatically configuring the adjustment and control unit 12.

An important aspect characterising the machine 1 is the possibility of making the parts easily accessible.

More specifically, the machine 1 is characterised by an easy access to the parts for cleaning, maintenance, sanitising, etc.

Generally, a tempering machine 1 does not require sanitising, because the temperatures in play are such as to avoid any formation of a bacterial type. However, the possibility of converting the tempering machine 1 into a machine for making solid and semi-solid products, such as ice creams and the like, results in the need to sanitise the parts, given the higher risk of the formation of bacterial cultures.

For this reason, for example, the dispensing tap 6 is equipped with the fast coupling-uncoupling means 68, which allow, not only the possibility of replacing of the dispensing tap as stated above, but also the possibility of easily and quickly accessing the processing cylinder 4, so as to sanitise it effectively and in a short time. According to another embodiment, not illustrated, the heat exchange circuit 20 can have means for internal sanitising or for connecting with external means, so as to sanitise and clean the ducts of the circuit.

According to yet another embodiment, also not illustrated, the machine 1 can have internal sanitising means for sanitising the collection tank 2, the processing cylinder 4, the dispensing tap 6 and the recovery tank 78, which allow a fast and automatic cleaning of the machine 1, without the need to use external sanitising means.

The machine as described has many advantages. Firstly, the machine allows a precise control of the chocolate tempering process, or of the making of other similar products such as creams, etc. Moreover, the various temperatures can be adjusted independently, by a suitable configuration of the adjustment and control unit 12, on the basis of the characteristics of the product to be processed: in the case of chocolate, on the basis of the content of cocoa-butter.

The setting of the temperatures is fully automatic. It is the adjustment and control unit 12 which keeps the desired regulation constant over time, on the basis of the data relative to the chocolate or product to be processed, set by an external operator or contained in a configuration set defined by the interchangeable electronic card 94 which can be associated with the unit 12.

Another advantage is the possibility of using an existing machine and reconfiguring it as a tempering machine.

This is possible by using the aforementioned kit 92.

As already indicated, the optional kit 92 allows a machine to be adapted, for example, for making soft ice cream and the like, in a machine for making tempered chocolate by replacing only some of its components.

Moreover, the machine lends itself easily to maintenance and sanitising operations, because all its components are easily removable and its parts are easily accessible.

The invention described is susceptible of industrial application. The invention may also be modified and adapted in several ways without thereby departing from the scope of the inventive concept. Moreover, all details of the invention may be substituted by technically equivalent elements.

## Claims

1. A chocolate tempering and dispensing machine, comprising a tank (2) for collecting the chocolate to be processed, a cylinder (4) for processing the chocolate connected to the collection tank (2), a dispensing tap (6) for dispensing the chocolate flowing from the processing cylinder (4), at least a first stirrer (8) inside the cylinder (4) for mixing the chocolate being processed and at least a second stirrer (18) inside the collection tank (2) designed to prevent solidification of the chocolate contained therein; means for heating the collection tank (2) in particular for melting the chocolate contained at a first temperature, means for cooling the processing cylinder (4) for carrying the incoming chocolate to the dispenser tap (6) at a second temperature, and means for heating the dispensing tap (6) for dispensing the chocolate at a third temperature; a unit (12) for adjusting and controlling the above mentioned means for cooling and heating for adjusting each first, second and third temperature value on the basis of a respective predetermined and set value.

2. The machine according to claim 1, **characterised in that** the heating means for heating the collection tank (2), the cooling means for cooling the processing cylinder (4) and the means for heating the dispensing tap (6) comprise a fluid heat exchange circuit (20) comprising a first portion (30) for heating the chocolate, a second portion (32) for cooling the chocolate, a motor-driven compressor (22) for circulating the heat exchange fluid, a first heat exchanger (24) for cooling the fluid coming from the motor-driven compressor (22), a first heat exchanger jacket (26) positioned downstream of the motor-driven compressor (22) and mounted around the collection tank (2), a second heat exchanger jacket (28) positioned downstream of the motor-driven compressor (22) and mounted around the processing cylinder (4), and means (46) of adjusting the flow of fluid entering the first (26) and second (28) jackets.

3. The machine according to claim 2 **characterised in that** the adjustment means (46) comprise a plurality of electronically controlled on-off valves or solenoid valves (48, 50, 52 ,54) positioned, respectively, on the first (30) and on the second (32) portion of the circuit (20), upstream of the collection tank (2) and the processing cylinder (4).

4. The machine according to claim 3 **characterised in that** the adjustment and control unit (12) controls the opening of the solenoid valves (48, 50, 52, 54) on the basis of a respective signal (S1, S2, S3, S4) indicating the temperature of the chocolate coming out from the collection tank (2) and the processing cylinder (4).

5. The machine according to claim 3 **characterised in that** the adjustment and control unit (12) controls the opening of the solenoid valves (48, 50, 52, 54) for a predetermined and set time.

6. The machine according to any of the foregoing claims from 2 to 5 **characterised in that** the adjustment means (46) comprise a first temperature sensor (60), positioned at the outfeed of the collection tank (2), and a second temperature sensor (62), positioned at the outfeed of the processing cylinder (4); the dispensing tap (6) having a third temperature sensor (70) for measuring the temperature of the chocolate dispensed; the third sensor (70) being calibrated, by the adjustment and control unit (12), on the value of the third temperature.

7. The machine according to any of the foregoing claims from 2 to 6 **characterised in that** the adjustment means (46) comprise a 3-way valve (64) positioned downstream of the compressor (22).

8. The machine according to any of the foregoing claims **characterised in that** the means for heating the dispensing tap (6) comprise at least a first resistor (66) inside the dispensing tap (6); the first resistor (66) being activatable by the adjustment and control unit (12) for heating the dispensing tap (6).

9. The machine according to any of the foregoing claims **characterised in that** it comprises a tank (78) for recovering the dispensed chocolate, not drawn, located below the dispensing tap (6), facing the outlet of the tap (6) and a pump (84) for suction and delivery of the chocolate from the recovery tank (78) to the collection tank (2), the recovery tank (78) being provided with heating means (80) to prevent solidification of the collected chocolate, defined by at least a second resistor (82) which may be activated by the adjustment and control unit (12).

10. The machine according to any of the foregoing claims **characterised in that** the predetermined value of the first predetermined temperature is between 40°C and 55°C.

11. The machine according to any of the foregoing claims **characterised in that** the predetermined value of the second predetermined temperature is between 23°C and 30°C.

12. The machine according to any of the foregoing claims **characterised in that** the predetermined value of the third predetermined temperature is between 27°C and 33°C.

13. The machine according to any of the foregoing claims **characterised in that** it comprises a reconfiguration kit (92); the kit (92) comprising the dispensing tap (6) comprising the first resistor (66), the recovery tank (78) comprising the second resistor (82), a configuration card (94) of the adjustment and control unit (12).

## Patentansprüche

1. Maschine für die Temperierung und Ausgabe von Schokolade, umfassend einen Behälter (2) zum Sammeln der zu verarbeitenden Schokolade, einen Zylinder (4) zum Verarbeiten der Schokolade, der mit dem Sammelbehälter (2) verbunden ist, einen Ausgabehahn (6) zum Ausgeben der aus dem Vearbeitungszylinder (4) herausfließenden Schokolade, mindestens ein erstes Rührwerk (8) im Zylinder (4) zum Mischen der verarbeiteten Schokolade und mindestens ein zweites Rührwerk (18) im Sammelbehälter (2), der dazu konzipiert ist, ein Festwerden der darin enthaltenden Schokolade zu verhindern; Mittel zum Erwärmen des Sammelbehälters (2) insbesondere zum Schmelzen der enthaltenen Schokolade bei einer ersten Temperatur, Mittel zum Abkühlen des Verarbeitungszylinders (4) zum Führen der ankommenden Schokolade zum Ausgabehahn (6) bei einer zweiten Temperatur, und Mittel zum Erwärmen des Ausgabehahns (6) zum Ausgeben der Schokolade bei einer dritten Temperatur; eine Einheit (12) zum Anpassen und Steuern der zuvor genannten Mittel zum Abkühlen und Erwärmen zum Anpassen eines jeweiligen ersten, zweiten und dritten Temperaturwertes auf der Grundlage eines entsprechenden vorher festgelegten und eingestellten Wertes.

2. Maschine nach Anspruch 1, **dadurch gekennzeichnet, dass** die Erwärmungsmittel zum Erwärmen des Sammelbehälters (2), die Kühlmittel zum Abkühlen des Verarbeitungszylinders (4) und die Mittel zum Erwärmen des Ausgabehahns (6) einen Fluidwärmeaustauschkreis (20) umfassen, umfassend einen ersten Abschnitt (30) zum Erwärmen der Schokolade, einen zweiten Abschnitt (32) zum Abkühlen der Schokolade, einen motorbetriebenen Kompressor (22) zum Zirkulieren des Wärmetauschfluids, einen ersten Wärmetauscher (24) zum Abkühlen des vom motorbetriebenen Kompressor (22) kommenden Fluids, eine erste Wärmetauschummantelung (26), die dem motorbetriebenen Kompressor (22) nachgelagert positioniert ist und um den Sammelbehälter (2) herum montiert ist, eine zweite Wärmetauschummantelung (28), die dem motorbetriebenen Kompressor (22) nachgelagert positioniert ist und um den Verarbeitungszylinder (2) herum montiert ist, und Mittel (46) zum Anpassen des Flusses von Fluid, das in die erste (26) und zweite (28) Ummantelung eintritt.

3. Maschine nach Anspruch 2, **dadurch gekennzeichnet, dass** die Anpassungsmittel (46) eine Vielzahl von elektronisch gesteuerten Ein-/Aus-Ventilen oder Magnetventilen (48, 50, 52, 54) umfasst, die auf dem ersten (30) beziehungsweise auf dem zweiten (32) Abschnitt des Kreises (20) dem Sammelbehälter (2) und dem Verarbeitungszylinder (4) vorgelagert positioniert sind.

4. Maschine nach Anspruch 3, **dadurch gekennzeichnet, dass** die Anpassungs- und Steuereinheit (12) das Öffnen der Magnetventile (48, 50, 52, 54) auf der Grundlage eines jeweiligen Signals (S1, S2, S3, S4) steuert, das die Temperatur der aus dem Sammelbehälter (2) und dem Verarbeitungszylinder (4) austretenden Schokolade angibt.

5. Maschine nach Anspruch 3, **dadurch gekennzeichnet, dass** die Anpassungs- und Steuereinheit (12) das Öffnen der Magnetventile (48, 50, 52, 54) für eine vorher festgelegte und eingestellte Zeit steuert.

6. Maschine nach einem der vorangehenden Ansprüche 2 bis 5, **dadurch gekennzeichnet, dass** die Anpassungsmittel (46) einen ersten Temperatursensor (60), der am Austritt des Sammelbehälters (2) positioniert ist, und einen zweiten Temperatursensor (62) der am Austritt des Verarbeitungszylinders (4) positioniert ist, umfassen; wobei der Ausgabehahn (6) einen dritten Temperatursensor (70) zum Messen der Temperatur der ausgegebenen Schokolade aufweist; wobei der dritte Sensor (70) durch die Anpassungs- und Steuereinheit (12) auf den Wert der dritten Temperatur kalibriert wird.

7. Maschine nach einem der vorangehenden Ansprüche 2 bis 6, **dadurch gekennzeichnet, dass** die Anpassungsmittel (46) ein Dreiwegeventil (64) umfassen, das dem Kompressor (22) nachgelagert positioniert ist.

8. Maschine nach einem der vorangehenden Ansprüche, **dadurch gekennzeichnet, dass** die Mittel zum Erwärmen des Ausgabehahns (6) mindestens einen ersten Widerstand (66) im Ausgabehahn (6) umfassen; wobei der erste Widerstand (66) durch die Anpassungs- und Steuereinheit (12) zum Erwärmen des Ausgabehahns (6) aktivierbar ist.

9. Maschine nach einem der vorangehenden Ansprüche, **dadurch gekennzeichnet, dass** sie einen Behälter (78) zum Zurückgewinnen der nicht gezapften, ausgegebenen Schokolade, der unter dem Ausgabehahn (6) dem Auslass des Hahns (6) zugewandt liegt, und eine Pumpe (84) zum Ansaugen und Liefern der Schokolade vom Zurückgewinnungsbehälter (78) zum Sammelbehälter (2) umfasst, wobei der Zurückgewinnungsbehälter (78) mit Erwärmungsmitteln (80) zum Verhindern des Festwerdens der gesammelten Schokolade bereitgestellt ist, die durch mindestens einen zweiten Widerstand (82) definiert sind, der durch die Anpassungs- und Steuereinheit (12) aktiviert werden kann.

10. Maschine nach einem der vorangehenden Ansprüche, **dadurch gekennzeichnet, dass** der vorher festgelegte Wert der ersten vorher festgelegten Temperatur zwischen 40 °C und 55 °C beträgt.

11. Maschine nach einem der vorangehenden Ansprüche, **dadurch gekennzeichnet, dass** der vorher festgelegte Wert der zweiten vorher festgelegten Temperatur zwischen 23 °C und 30 °C beträgt.

12. Maschine nach einem der vorangehenden Ansprüche, **dadurch gekennzeichnet, dass** der vorher festgelegte Wert der dritten vorher festgelegten Temperatur zwischen 27 °C und 33 °C beträgt.

13. Maschine nach einem der vorangehenden Ansprüche, **dadurch gekennzeichnet, dass** sie ein Rekonfigurierungskit (92) umfasst; wobei das Kit (92) den Ausgabehahn (6), umfassend den ersten Widerstand (66); den Zurückgewinnungsbehälter (78), umfassend den zweiten Widerstand (82), eine Konfigurierungskarte (94) der Anpassungs- und Steuereinheit (12) umfasst.

## Revendications

1. Machine de tempérage et de distribution de chocolat, comprenant une cuve (2) destinée à recueillir le chocolat à transformer, un cylindre (4) destiné à transformer le chocolat relié à la cuve de collecte (2), un robinet de distribution (6) destiné à distribuer le chocolat coulant à partir du cylindre de transformation (4), au moins un premier agitateur (8) à l'intérieur du cylindre (4) destiné à mélanger le chocolat étant transformé et au moins un second agitateur (18) à l'intérieur de la cuve de collecte (2) conçu pour empêcher la solidification du chocolat contenu dans celle-ci ; des moyens destinés à chauffer la cuve de collecte (2) en particulier pour fondre le chocolat contenu à une première température, des moyens destinés à refroidir le cylindre de transformation (4) pour transporter le chocolat arrivant au robinet de distribution (6) à une seconde température, et des moyens destinés à chauffer le robinet de distribution (6) pour distribuer le chocolat à une troisième température ; une unité (12) destinée à régler et à commander les moyens de chauffage et de refroidissement susmentionnés pour régler chacune des première, seconde et troisième valeurs de température sur la base d'une valeur prédéterminée et fixée respective.

2. Machine selon la revendication 1, **caractérisée en ce que** les moyens de chauffage destinés à chauffer la cuve de collecte (2), les moyens de refroidissement destinés à refroidir le cylindre de transformation (4) et les moyens destinés à chauffer le robinet de distribution (6) comprennent un circuit à fluide échangeur de chaleur (20) comprenant une première partie (30) destinée à chauffer le chocolat, une seconde partie (32) destinée à refroidir le chocolat, un compresseur motorisé (22) destiné à faire circuler le fluide échangeur de chaleur, un premier échangeur de chaleur (24) destiné à refroidir le fluide provenant du compresseur motorisé (22), une première chemise-échangeur de chaleur (26) positionnée en aval du compresseur motorisé (22) et montée autour de la cuve de collecte (2), une seconde chemise-échangeur de chaleur (28) positionnée en aval du compresseur motorisé (22) et montée autour du cylindre de transformation (4), et des moyens (46) de réglage de l'écoulement du fluide entrant dans les première (26) et seconde (28) chemises.

3. Machine selon la revendication 2, **caractérisée en ce que** les moyens de réglage (46) comprennent une pluralité de valves on/off ou d'électrovalves commandées électroniquement (48, 50, 52 ,54) positionnées, respectivement, sur la première (30) et sur la seconde (32) partie du circuit (20), en amont de la cuve de collecte (2) et du cylindre de transformation (4).

4. Machine selon la revendication 3, **caractérisée en ce que** l'unité de réglage et de commande (12) commande l'ouverture des électrovalves (48, 50, 52, 54) sur la base d'un signal respectif (S1, S2, S3, S4) indiquant la température du chocolat sortant de la cuve de collecte (2) et du cylindre de transformation (4).

5. Machine selon la revendication 3, **caractérisée en ce que** l'unité de réglage et de commande (12) commande l'ouverture des électrovalves (48, 50, 52, 54) pendant une durée prédéterminée et fixée.

6. Machine selon l'une quelconque des revendications précédentes de 2 à 5, **caractérisée en ce que** les moyens de réglage (46) comprennent un premier capteur de température (60), positionné à la sortie de la cuve de collecte (2), et un second capteur de température (62), positionné à la sortie du cylindre de transformation (4) ; le robinet de distribution (6) ayant un troisième capteur de température (70) destiné à mesurer la température du chocolat distribué ; le troisième capteur (70) étant calibré, par l'unité de réglage et de commande (12), sur la valeur de la troisième température.

7. Machine selon l'une quelconque des revendications précédentes 2 à 6, **caractérisée en ce que** les moyens de réglage (46) comprennent une valve à 3 voies (64) positionnée en aval du compresseur (22).

8. Machine selon l'une quelconque des revendications précédentes, **caractérisée en ce que** les moyens destinés à chauffer le robinet de distribution (6) comprennent au moins une première résistance (66) à l'intérieur du robinet de distribution (6) ; la première résistance (66) pouvant être activée par l'unité de réglage et de commande (12) pour chauffer le robinet de distribution (6).

9. Machine selon l'une quelconque des revendications précédentes, **caractérisée en ce qu'**elle comporte une coupelle de récupération (78) du chocolat distribué, non prélevé, située en-dessous du robinet de distribution (6), faisant face à la sortie du robinet (6) et une pompe (84) destinée à aspirer et à distribuer le chocolat de la coupelle de récupération (78) à la cuve de collecte (2), la coupelle de récupération (78) étant pourvue de moyens chauffants (80) pour empêcher la solidification du chocolat recueilli, définis par au moins une seconde résistance (82) pouvant être activée par l'unité de réglage et de commande (12).

10. Machine selon l'une quelconque des revendications précédentes, **caractérisée en ce que** la valeur prédéfinie de la première température prédéterminée est comprise entre 40 et 55 °C.

11. Machine selon l'une quelconque des revendications précédentes, **caractérisée en ce que** la valeur prédéfinie de la seconde température prédéterminée est comprise entre 23 et 30 °C.

12. Machine selon l'une quelconque des revendications précédentes, **caractérisée en ce que** la valeur prédéfinie de la troisième température prédéterminée est comprise entre 27 et 33 °C.

13. Machine selon l'une quelconque des revendications précédentes, **caractérisée en ce qu'**elle comporte un kit de reconfiguration (92) ; le kit (92) comprenant le robinet de distribution (6) comprenant la première résistance (66), la coupelle de récupération (78) comprenant la seconde résistance (82), une carte de configuration (94) de l'unité de réglage et de commande (12).
